# EUROPEAN PATENT SPECIFICATION

(11) **EP 1 576 248 B1**
(45) Date of publication and mention of the grant of the patent: **01.03.2017**
(21) Application number: 03751775.2
(22) Date of filing: 16.06.2003
(51) Int. Cl.: B64D 11/00

(54) **PRESSURE RESPONSIVE BLOWOUT LATCH WITH RESERVOIR**
DRUCKEMPFINDLICHE SICHERHEITSVERRIEGELUNG GEGEN AUSBLASEN MIT SPEICHER
VERROU A RESERVOIR REAGISSANT A UN CHANGEMENT DE PRESSION

(30) Priority: 14.06.2002 US 389081 P
(43) Date of publication of application: 21.09.2005
(73) Proprietor: Hartwell Corporation, Placentia, CA 92870-6788 (US)
(72) Inventor: PRATT, John, D., Laguna Niguel, CA 92677 (US); ROZEMA, Timothy, S., Ladera Ranch, CA 92694 (US)
(74) Representative: Lavoix
(86) International application number: PCT/US2003/018908
(87) International publication number: WO 2003/106796

(56) References cited:
- WO-A-03/029585
- WO-A-03/029591
- US-A1- 2002 195 827
- US-A1- 2003 052 227

## Description

### BACKGROUND

The present disclosure relates generally to the field of latch mechanisms and particularly to a latch mechanism utilized in an aircraft. More particularly, the present disclosure relates to a latch mechanism which operates in response to a pressure change on at least one side of a barrier in an aircraft to allow a panel associated with the barrier to release upon a given set or range of pressure conditions.

By way of review, a variety of latch mechanisms have been developed to maintain panels, doors and other structures in a closed position. The reference to panels, doors and other structures relates to the use of latch mechanisms to retain a first body, such as a panel relative to a second body, such as a frame. With regard to the example of panels, a panel includes one portion which might be rotatably hinged or otherwise movably retained on a corresponding structure such as a frame. The panel serves to close or cover at least a portion of an opening defined by the frame for a variety of purposes including providing a barrier to prevent passage through the opening.

A variety of latch mechanisms have been developed to facilitate the movement or "blowout" of a panel relative to the frame. Such blowout latch mechanisms have been developed by Hartwell Corporation, assignee of the present disclosure, to facilitate disengagement of a panel from a frame or other structure under a set or range of "blowout" conditions. For example, if a pressure differential develops on opposite sides of a barrier or within an area at least partially housed or contained by the panel, the pressure differential will rise to a point where the panel may be forcibly removed, disengaged or "blown out" from the frame by forces associated with the pressure differential. Under these conditions, it is desirable to set the blowout force at a desired level or range so that premature disengagement of the panel from the primary structure does not occur. In this situation, the blow out load level can be set so that a predetermined pressure differential disengages the panel from the primary structure to protect and preserve the integrity of the frame and any related structures and devices.

In some situations, it would be desirable to maintain a panel in a closed position under one level or range of pressure conditions yet release the panel under a second range or set of conditions. Such level or range may or may not overlap or may be discrete ranges or, in fact, points. The panel in such a situation generally is in an environment where the pressure on either side of the panel is generally equalized. The panel may include a sealing structure to prevent the unwanted or abrupt passage of air there through. However, the pressure on either side of the panel is generally equal.

One example of the use of such a panel in a well-known environment is the use of a panel in a pressurized cabin such as in an aircraft. The panel is employed as a barrier to separate the flight crew, passengers and/or cargo into discrete areas. Such a panel may be used between the flight deck and passenger compartment as well as perhaps between the passenger compartment and corresponding storage area which is not occupied by passengers. In the situation in which the panel is used on an aircraft in which the cabin is pressurized, it may be desirable to maintain the panel in a closed position for many situations but allow the panel to be opened when the pressure differential between the two compartments changes. Such a pressure differential may occur in the case where cabin pressure drops in the cargo compartment due to a leak or other loss of pressure. Under these circumstances, it might be desirable to allow the cabin pressure to generally equalize to avoid or minimize damage which might result from the pressure differential.

Similarly, in a situation where a panel is positioned between the flight deck and the passengers, it may be desirable to release the panel and equalize the pressure between the flight deck and passenger area. In the situation in which the panel is positioned between the flight deck and passenger area, it might be desirable to allow the panel to disengage, rather than having the door structurally fail as a result of the unequal pressure differentials.

For example, the panel to the flight deck generally is maintained in a closed and latched position while in flight to maintain privacy and security of the flight crew. This prevents the passage of passengers or terrorists into the flight deck area. Increased latching strength is required in order to prevent a passenger or terrorist from forcibly opening the panel. However, in a situation in which pressure is lost in the passenger compartment, it may be desirable to allow the panel to release in order to prevent the panel from being forcibly removed from the structure by the pressure differential. This would help prevent injury to passengers if the panel were forcibly removed from the frame and expelled into the passenger compartment. By allowing the panel to release in response to the pressure differential between the flight deck and passenger compartment, the panel will open thereby providing increased safety. Similarly, if the pressure differential occurs as a result of loss of pressure in the flight deck, the panel will be allowed to disengage the frame, yet be retained thereon, to provide pressure equalization to prevent injury to the flight crew and equipment.

With the foregoing in mind, it would be desirable to provide a method, system and apparatus to provide unlatching of the door latch under a range or set of pressure differential circumstances.

Additional features of the disclosure will become apparent to those skilled in the art upon consideration of the following detailed description of the disclosed embodiments.

### BRIEF DESCRIPTION OF THE DRAWINGS

The detailed description particularly refers to the accompanying figures in which:
Fig. 1 is a partial fragmentary view of a portion of an aircraft having a barrier which is positioned between a cockpit area and a passenger area;
Fig. 2 is a diagrammatic cross-sectional view taken along line 2-2 of Fig. 1 showing a panel in the barrier employing a latch mechanism;
Fig. 3 is a diagrammatic perspective view of the latch mechanism showing a bolt movable between a locked or engaged position and an unlocked or disengaged position, and showing one end of a pressure responsive device;
Fig. 4 is a diagrammatic perspective view of the latch mechanism shown in Fig. 3, showing the bolt in the unlocked or disengaged position;
Fig. 5 is a bottom view of a cover of the latch mechanism;
Fig. 6 is an exploded perspective view of the latch mechanism shown in Figs. 1-5 and 7-16;
Fig. 7 is a bottom view of the latch mechanism shown with a housing and cover shown in phantom line;
Fig. 8 is a view similar to that of Fig. 7, showing the bolt partially moved towards the unlocked position and showing a shear pin disengaged from a slide;
Fig. 9 is a view similar to that of Figs. 7 and 8, showing the bolt in a fully unlocked position;
Fig. 10 is a bottom, perspective view of the pressure response device, bolt, slide, and retainers removed from the housing as the shear pin is disengaging from the slide and showing the retainers engaged with the slide;
Fig. 11 is a view similar to that of Fig. 10 showing the slide and the shear pin as it disengages from the slide;
Fig. 12 is view similar to Figs. 9 and 10 showing movement of the slide diminished and showing the shear pin disengaged from the slide so that the slide an be moved relative to the piston;
Fig. 13 is a sectional view taken along the line 13-13 of Fig. 7;
Fig. 14 is a plan view of the latch mechanism with the cover removed to show the structure therein;
Fig. 15 is a partial fragmentary cross-sectional view taken along line 15-15 of Fig. 14;
Fig. 16 is a cross-sectional view taken along line 16-16 in Fig. 15;
Fig. 17 is partial fragmentary general diagrammatic view of a latch mechanism in combination with a panel and a frame;
Fig. 18 is an enlarged, partial fragmentary, general diagrammatic cross-sectional view taken along line 18-18 in Fig. 17;
Fig. 19 is an enlarged partial fragmentary cross-sectional, general diagrammatic view similar to that as shown in Fig. 18 showing another embodiment of this general diagrammatic illustration of the latch mechanism;
Fig. 20 is an exploded perspective view of another embodiment of the latch mechanism;
Fig. 21 is a partial fragmentary, cross-sectional, plan view of the latch mechanism shown in Figs. 20-23;
Fig. 22 is a side view of the assembled mechanism of Fig. 21; and
Fig. 23 is a side view of the assembled mechanism as shown in Figs. 21 and 22.

### DETAILED DESCRIPTION

While the present disclosure may be susceptible to embodiment in different forms, there is shown in the drawings, and herein will be described in detail embodiments with the understanding that the present description is to be considered an exemplification of principles of the disclosure and is not intended to limit the disclosure details of construction and the arrangements of components set forth in the following description or illustrated in the drawings.

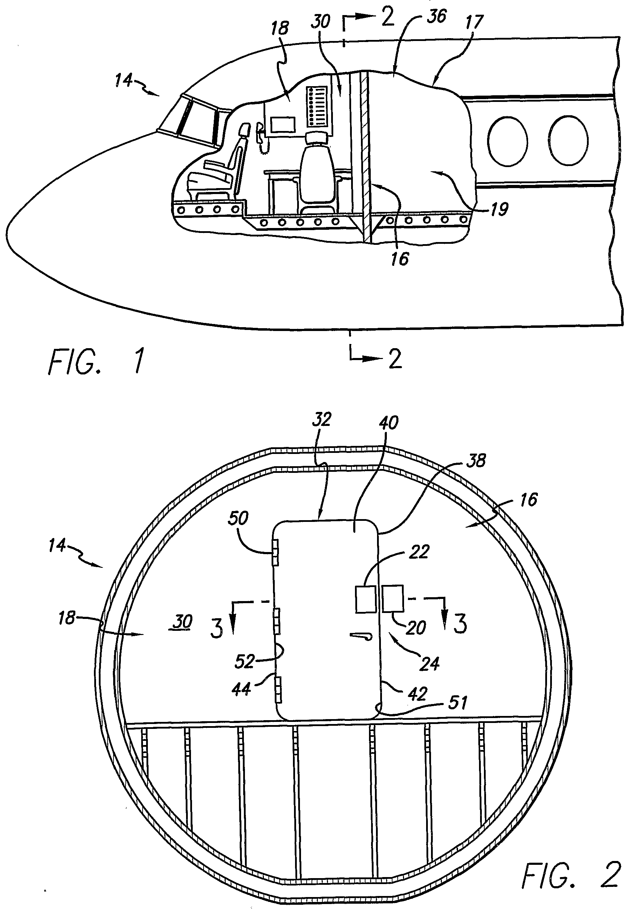

Fig. 1 shows a fragment of a front section of an aircraft 14 in which a portion of the outside of the aircraft 14 has been broken away to illustrate a barrier 16. The barrier 16 divides an internal compartment 17 to separate a flight deck or cockpit area 18 from a passenger area 19. As it will be described in detail herein below, the present disclosure helps to prevent unpermitted or unauthorized access from the passenger compartment 19 to the cockpit 18. Also, the disclosure allows automatic opening of the barrier 16 in the event of depressurization or decompression in either the cockpit 18 or passenger compartment 19.

Fig. 2 provides a general diagrammatic illustration taken along line 2-2 in Fig. 1 showing a view from the cockpit area 18 facing the barrier 16. As shown generally in Fig. 2, latch mechanism 24 includes a first latching portion 20 and a second receiving portion 22. In the illustrative embodiment, first latching portion 20 is responsive to pressure differentials or pressure change in the cockpit 18 or the passenger area 19, as described further herein.

The door or panel assembly 32 includes a frame structure 38 and a panel 40. The panel 40 includes a free end 42 and a movably retained end 44. Depending on the design of the panel, the panel 40 may swing inwardly towards the cockpit 18 or outwardly toward the passenger area 19, or swing both directions. The movement of the panel 40 depends upon the retaining structure 50, such as a hinge structure, which attaches the retained end 44 to a receiver portion 51 of the frame structure 52. In summary, the free end 42 of the door panel 40 moves relative to the retained end 44 by way of the retaining means 50 to move the panel relative to the receiver portion 51 of the frame structure 52. It should be noted that the panel 40 may not include an entire door structure and may instead be a panel retained on and as part of the door structure such that the door structure may actually define a portion of a frame relative to the panel in this example.

The first and second portions 20, 22 are attached to respective, generally proximate areas on the frame 38 and panel 40. The first and second portions, 20, 22 make up the latch mechanism 24. It should be understood, however, that it is within the scope of the disclosure to exchange the functions of first portion 20 and second portion 22 such that first portion 20 is the retaining portion and second portion 22 is the latching portion. Additionally, it should be understood that the latch mechanism 24 may be contained in one of the portions 22, 20 such that the structure extends from the latch mechanism 24 and would engage the corresponding oppositely positioned structure. For example, in a situation in which the latch mechanism 24 is in the form of a latch assembly position such as first portion 20 in Fig. 2. In this situation, the latch mechanism (24) may include a bolt 60 or other extending portion which engages the panel 40. In this situation there may not be a separate component into which the bolt 60 is received. It is fully within the scope of the present disclosure that the latch mechanism 24 may be a single component with a portion to engage or otherwise retain the panel or door 40 to which a latch mechanism 24 is attached.

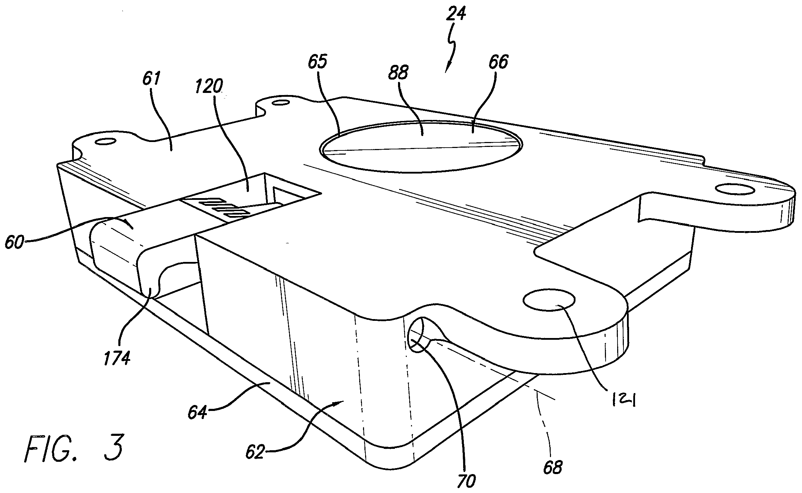

As will be described in greater detail herein, the latch mechanism 24 illustratively functions to provide a resistance force which resists separation of the panel 40 from the corresponding frame 38. In this regard, the panel 40 is retained or locked in position until other pressure related conditions are met. The retaining force is generally illustrated as a mechanical arrangement whereby one mechanism engages a corresponding area to prevent dislodgement of the panel 40 from the frame 38. It is also envisioned that portions 20, 22 making up the latch mechanism 24 may have a magnetic force such that the magnetic force resists displacement of the door panel 40 relative to the frame 38. As shown in the embodiment of Figs. 3-12, first portion 20 of latch mechanism 24 includes a bolt 60 which engages a corresponding second receiving portion 22 coupled to the panel 40, thereby preventing disengagement of the panel 40 from the frame 38.

As illustrated, the latch mechanism 24, such as first portion 20, comprises a housing 62, a cover 64, and a pressure responsive device 66 shown herein with an air cylinder 65 and a reservoir 93 configured to lock or unlock bolt 60. The cover 64 is mounted against the barrier 16 and may be provided in the form of an armor material to resist damage to the latch mechanism from a gun shot or other destructive force. Illustratively, bolt 60 pivots about an axis 68 defined by rod 70 which is positioned in bore 119 and retained therein by set screw 121. However, it is within the scope of the disclosure to provide other means of moving bolt 60. For example, bolt 60 could be moved laterally relative to housing 62 between an extended position and a retracted position. This movement could also be controlled by a piston, for example, with a piston that is mounted transverse to the illustrative pressure responsive device 66. The pressure responsive device 66 detects a decrease in pressure on one side of the panel.

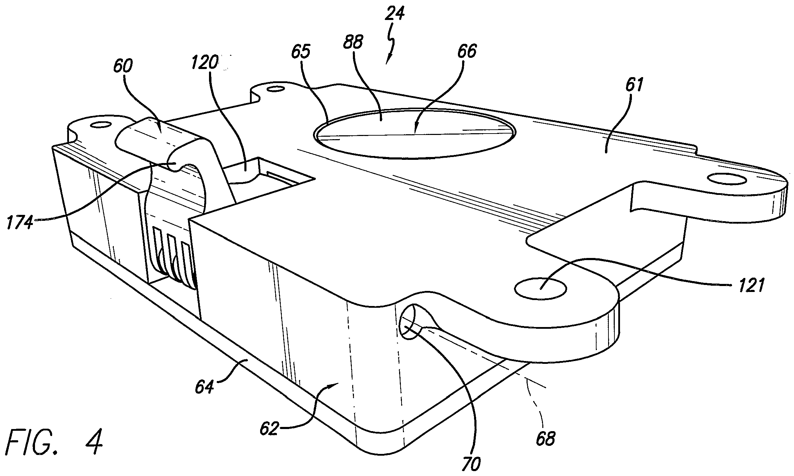

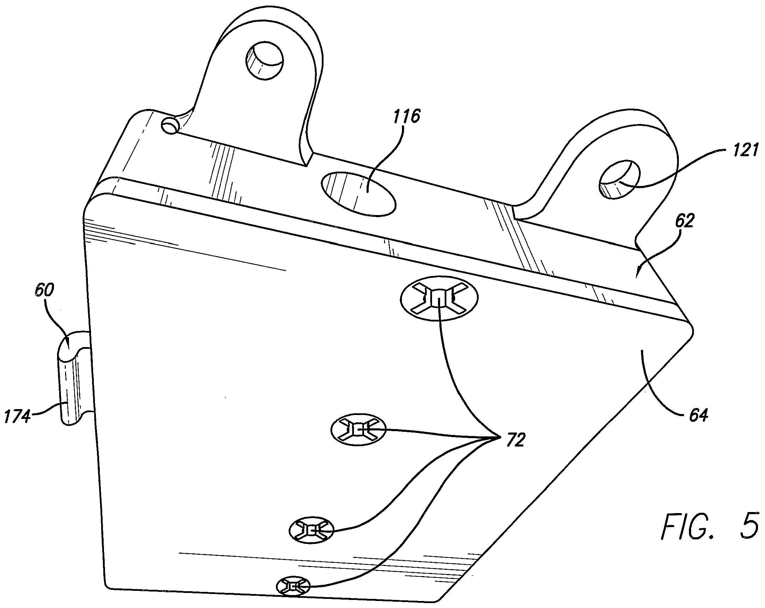

As will be described further within, bolt 60 can be moved between a locked position as shown in Fig. 3 and an unlocked or released position, shown in Fig. 4. In the unlocked position, bolt 60 is rotated or disengaged such that panel 40 may be moved relative to frame structure 38. It should be noted that the receiving portion 22 may be in the form of a strike plate as well as a strike pocket or other bolt retaining device. The strike plate or bolt pocket may be attached to the panel to provide secure engagement of the bolt 60 therewith. Fig. 5 is a rear view of first portion 20, showing cover 64 fastened to housing 62 with fasteners 72.

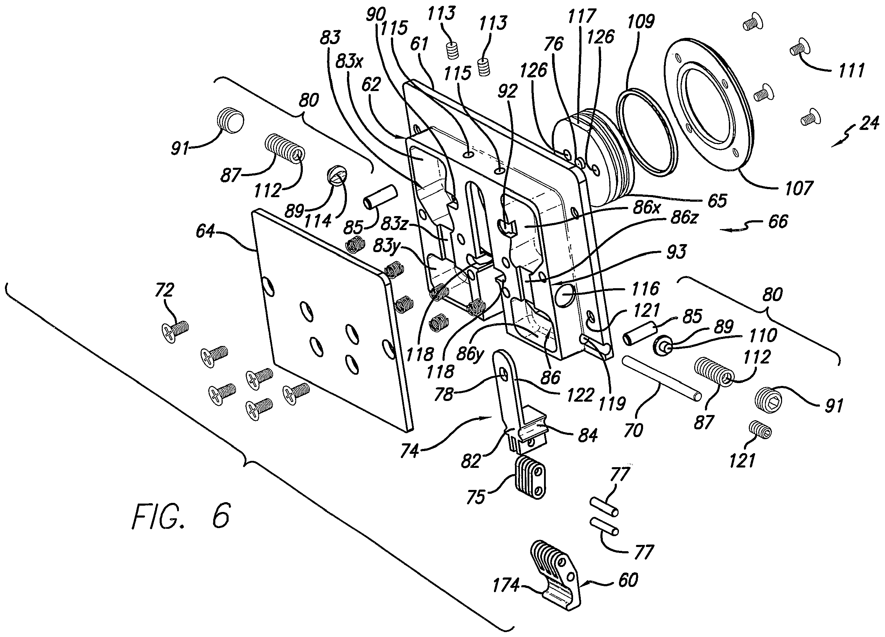

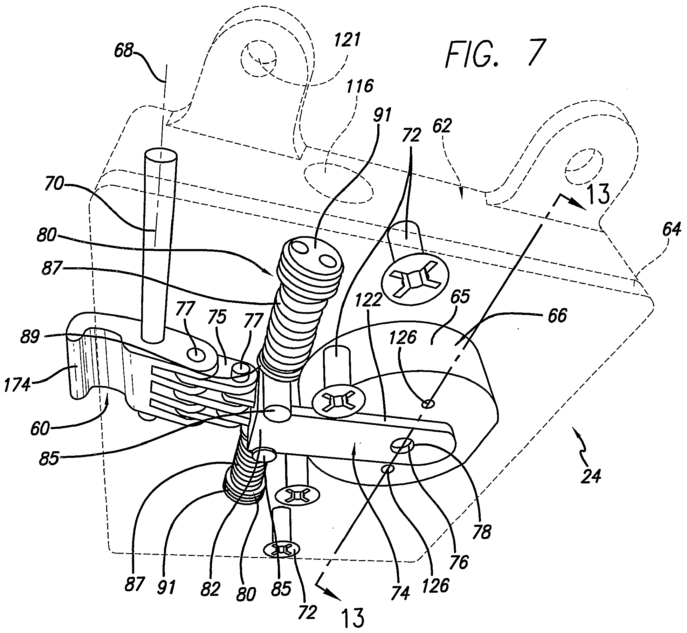

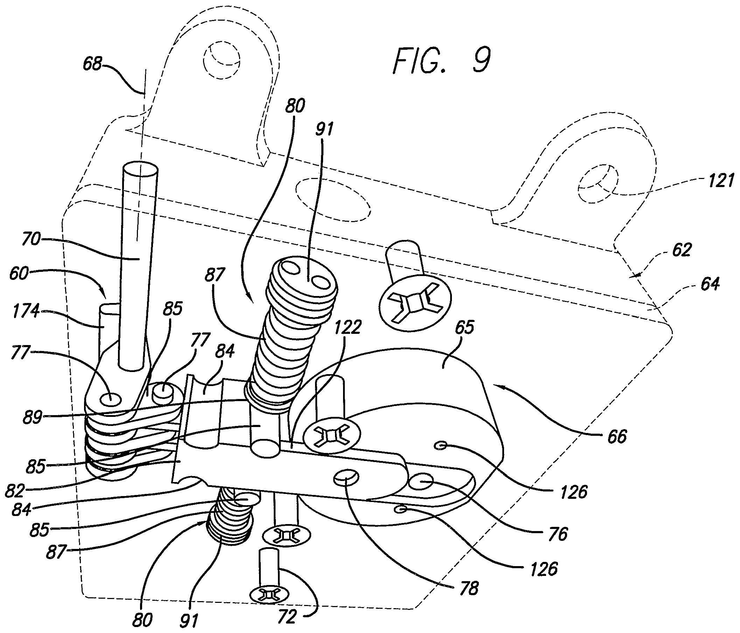

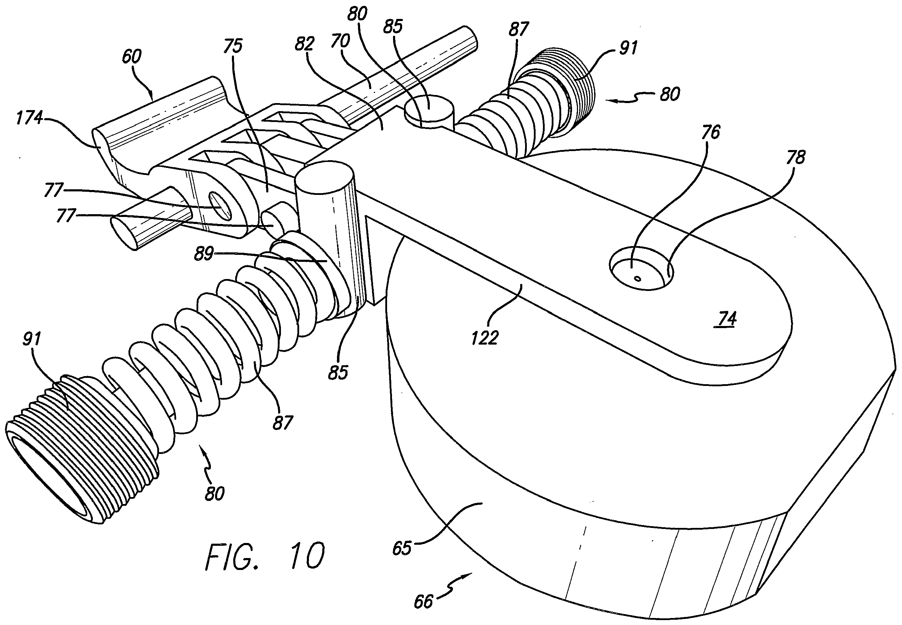

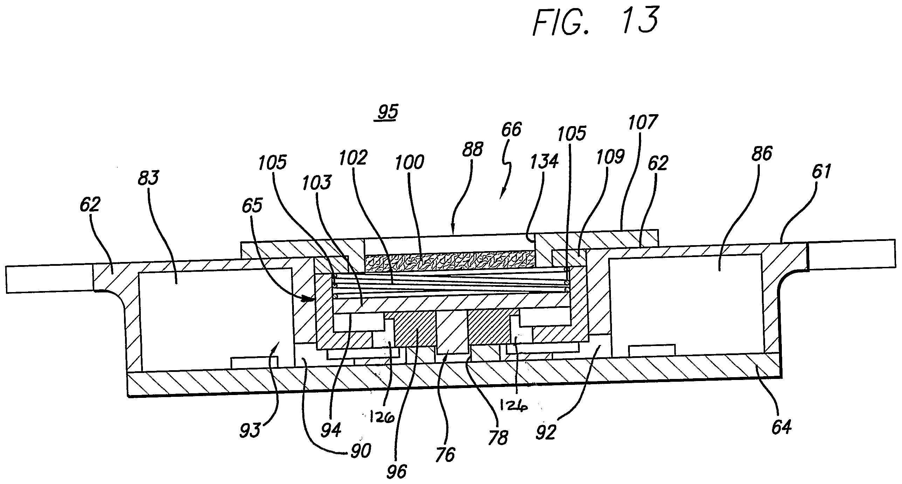

Internal elements of first portion 20 can be seen in Figs. 6-12, wherein cover 64 has been removed. Illustratively, bolt 60 is pivotably coupled to a first end of slider 74. The slider 74 with a link 75 retained therebetween with link pins 77, is configured to slidably move and articulate relative to pressure response device 66. As noted above, pressure responsive device 66 illustratively includes a pneumatic piston (see, Fig. 13), however, it is within the scope of the disclosure for pressure responsive device 66 to comprise any type of pressure-actuated switch, for example, an electrically powered solenoid. Air cylinder 65 of the pressure responsive device 66 illustratively moves a bolt engaging device 76 in the form of a shear pin 76 between a position in which it engages the slider 74 (see, Fig. 7) and a disengaged (See, Fig. 9) position in which it is disengaged from the slider 74. In the engaged position, shear pin 76 is operatively engaged with the slider 74 to resist movement of the slider 74. As illustrated, the pin 76 mates with or otherwise engages a receiving structure 78, shown in the form of an aperture 78 formed in slider 74 such that slider 74 cannot move relative to pressure responsive device 66. When slider 74 is locked in this position, bolt 60 is held in its locked position, thereby securing panel 40 relative to frame structure 38. Another view of actuator 66, bolt 60, shear pin 76, and slider 74 having aperture 78 can be seen in Fig. 10. In this perspective view of the internal elements of first portion 20 removed from housing 62, shear pin 76 can be seen mated with aperture 78.

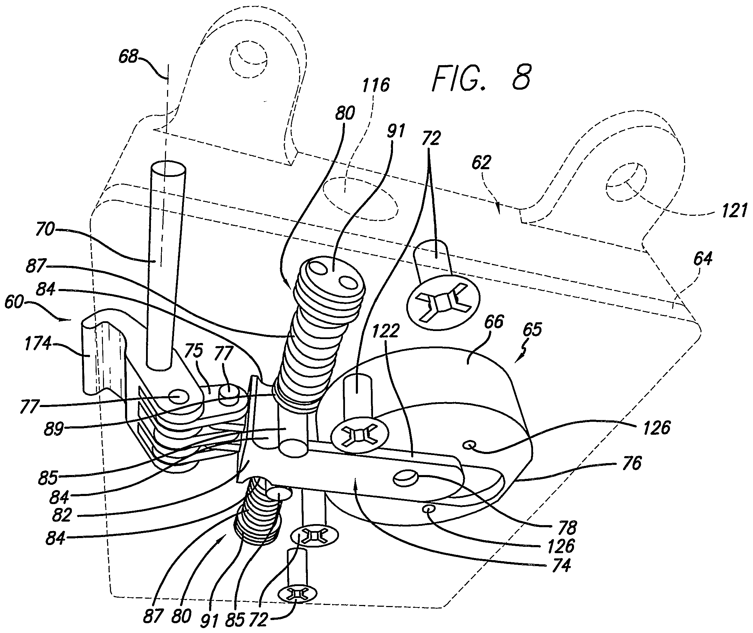

When the pressure responsive device 66 is triggered to withdraw shear pin 76 from a mating relationship with aperture 78, slider 74 is retained in position by retainer assembly 80. Illustratively, the retainer assembly 80 is in the form of a spring biased retainer which biased against bolt-end 82 of slider 74. Slider 74 also has recesses 84, as can be seen in Figs. 6 and 8, which receive a roller 85 biased by spring 87 held between a detent plug 89 and a detent set screw 91 and cooperate to retain slider 74 (and therefore bolt 60) in the retained, locked position until the biasing force provided by the retainer assembly 80 is overcome.

The detent plug 89 includes a post 110 which is received in a bore 112 defined by the spring 87. A face of the detent plug 89 includes a recess 114. The recess 114 is generally oriented to cradle the outside surface of the detent roller 85 to enhance the engagement operation of the retainer assembly 80. The set screw 91 is threaded and engages correspondingly threaded bore 116 in the housing 62. The set screw 91 can be operated to adjust the pre-load of the spring 87 on the rollers 85. The pre-load is adjusted by engaging the set screw 91 against the spring 87 and inwardly threading the set screw 91 until a desired pre-load force is exerted by the spring from a now compressed in the bore 116 against the detent plug 89 and corresponding detent roller 85.

The detent rollers 85 are axially inserted into corresponding receptacles 118 in the housing. The receptacles are slightly elongated relative to the bore 116 to provide some degree of movement of the rollers 85 relative to the slider 74. As such, when the determined detent force has been overcome, the slider 74 moves generally axially outwardly toward the bolt 60 end of the housing 62 along the slider channel 120. During this movement, the recesses 84 on the sides of the slider 74 disengage the rollers 85. The rollers 85 are slightly compressed against the spring 87 and are displaced inwardly into the receptacles 118. The rollers 85 are retained in this compressed position as a result of engaging the slider sides 122 while the slider 74 is extended in the channel 120.

The latch mechanism 24 includes structures which function to vent on only one side of the barrier 16. In this regard, there is no need to provide a venting passage between the cockpit 18 and the passenger compartment 19. This overcomes the problem of some situations in which venting to the passenger compartment 19 could be detrimental. While there are situations which benefit from venting on both sides of the compartments 18, 19, it may desirable to prevent interference or disruption of the latch mechanism 24 by venting on only one side of the barrier 16.

More particularly, there are situations in which venting from only the cockpit side 18 is desirable. For example, in order to avoid terrorist intrusion into the cockpit area 18 venting may only be desirable on the cockpit side. This construction provides the blow-out feature of the latch 24 but eliminates the opportunity for a terrorist to interfere or otherwise override the venting system which might occur by venting to both sides of the barrier 16. Chambers 83, 86 are provided in the housing 62 collectively defining a reservoir chamber 93 which is at least generally isolated from the cockpit ambient atmosphere in this example. The reservoir chamber 93 provides a reference pressure relative to and communicating with the air cylinder 65. The air cylinder 65 includes one side that communicates with the reservoir 93 and another side which communicates with the ambient atmosphere or cockpit atmosphere. The air cylinder 66 communicates with the chambers 83, 86, the reservoir chamber 93, by means of openings or apertures 126 communicating with passages 90, 92. This referential volume of air in the reservoir chamber 93 does not change in pressure rapidly. In contrast, an exposed or exterior side 61 of the housing 62 includes the outside surface 88 of the air cylinder 65. In the present example, this side 88 of the air cylinder 65 communicates with the cockpit atmosphere. As such, a rapid change in the pressure in the cockpit or ambient atmosphere will produce an effect on the outside contact surface 88 of the air cylinder 65.

The chambers 83, 86 do not respond as rapidly to the change in pressure. The difference in pressures and the rate at which the pressures change between the cockpit atmosphere and the atmosphere in the chambers 83, 86 facilitates operation of the latch mechanism 24. In this regard, slow changes in pressure in the cockpit atmosphere allow equalization of the pressure in the chambers 83, 86. As such, there is generally no movement of the shear pin 76 relative to the slider 74. However, when a rapid change occurs in the cockpit atmosphere, such as by way of a decompression event, the air cylinder 65 operates such that the drop in pressure withdraws the shear pin 76 from engagement with the aperture 78 causing disengagement of the shear pin 76 from the slider 74. As a result, disengagement of the slider 74 from the restraining force of the shear pin 76 facilitates displacement of the bolt assembly 60, 75 allowing disengagement of the latch mechanism 24 relative to the corresponding surface. As a result, the door or panel can swing open during such a decompression event. In the present example, the door or panel would swing inwardly towards the cockpit area to prevent the panel from being dislodged from the barrier 16 thereby preventing further damage to the cockpit crew, equipment and structure.

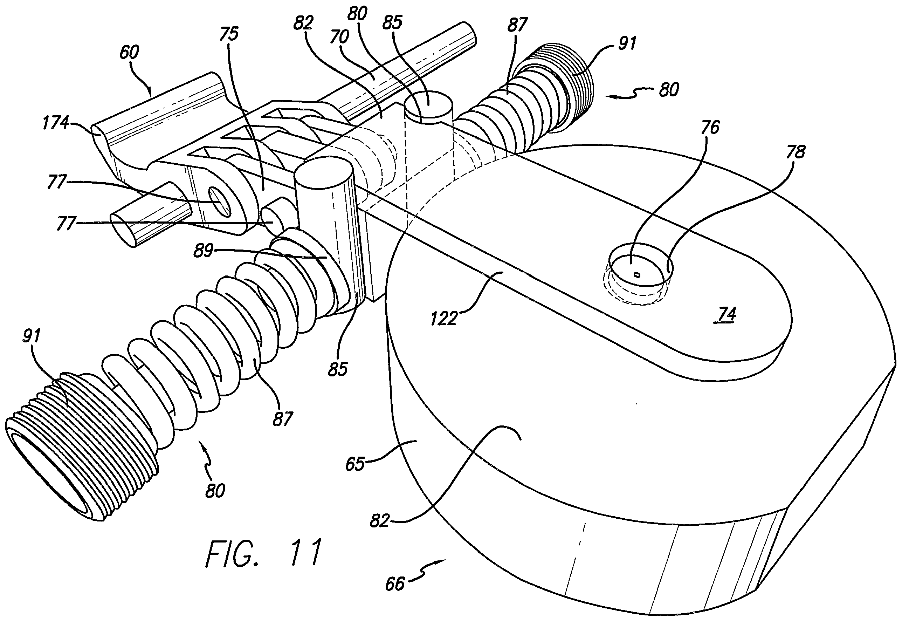

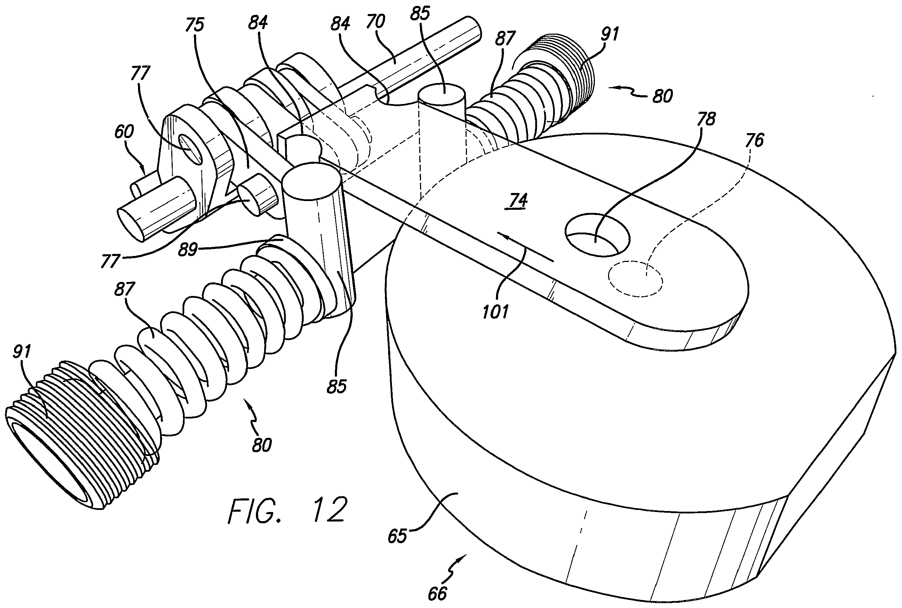

Another view of the state of the internal elements of the latch 24 when shear pin 76 is withdrawn from a mating relationship with aperture 78 can be seen in Fig. 11. Illustratively, shear pin 76 extends into and engages aperture 78 so that slider 74 can move 101 (see Fig. 12) relative to actuator 66 without being blocked by shear pin 76.

A retainer assembly 80 is illustratively configured to retain slider 74 until a predetermined amount of pressure or force is placed on bolt 60, at which time the biasing force of retainers 80 is overcome by the forces transmitted through bolt 60 that urge slider 74 to move relative to actuator 65. This predetermined amount of pressure could be, for example, the amount of pressure change within a predetermined period of time, deemed appropriate to release panel 40 from frame structure 38. For example, the air cylinder 66 can be configures to withstand a 300 Joule load. When a pressure drop of 3.44KPa (0.5 psi) in 0.004 s (4 ms) is sensed. Upon satisfaction of these parameters to bolt 66 is released. This may be a pressure at which it is desired that panel 40 releases from frame structure 38 in order to prevent damage, or it may be a pressure at which it is desired that panel 40 can be opened or moved relative to frame structure 38 by an operator such as a flight attendant. For example, the spring 87 can be formed to provide a range of pre-loaded release load. For example, the spring could be manufactured for 11,3-22,6 Kg (25-50 pounds) release load, another spring could be manufactured for 22,6-36,3 Kg (50-80 pounds) release load and yet another spring might be manufactured for 36,3-49,9 Kg (80-110 pounds) release load. The ranges above are for illustrative purposes only and are not intended to limit the application in any way. To the contrary, other ranges including release loads which are below or above those noted herein might also be applicable depending on the situation.

Turning to the sectional view shown in Fig. 13, it can be seen that the pressure responsive device, in the form of a pneumatic piston/actuator 65, operates in the manner as described. Housing 62 generally defines a first chamber 83 and a second chamber 86 on either side of air cylinder 65, collectively the reservoir chamber 93. The air cylinder 65 and reservoir 93 generally define the pressure responsive device 66 of the present embodiment. The chambers 83, 86 include corresponding subchambers 83x, 83y and 86x, 86y. The subchambers communicate through channels 83z and 86z, respectively. Cover 64 encloses the chambers 83, 86 and piston/actuator 65 on one end. A first side 88 of the pressure responsive device 66 or outside contact surface 88, is configured to be in contact with the environment 98 such as the cockpit or atmosphere. Chambers 83, 86 can be filled with any fluid, but are illustratively filled with air. Chambers 83, 86 connect with passageways 90, 92, respectively, wherein the fluid (i.e. air) comes into contact with or communicate with working surface 94 of piston/actuator 65. Illustratively, the locked position shown in Fig. 13 is achieved when the difference (if any) between environmental pressure and the fluid pressure inside chambers 83, 86 (and therefore inside passageways 90, 92) is such that the working surface 94 remains in contact with stopper 96, and shear pin 76 is releasably mated with aperture 78. The air cylinder 65 as illustrated maintains the shear pin 76 in an outwardly biased orientation as the result of spring 105 retained by cover 107 and gasket 109 retained by screws 111. In other words, the shear pin 76 is biased in an orientation in which it extends through the corresponding aperture 78 on the slider 74. The air cylinder 65 is retained in housing 62 by threaded set screws 113 extending through correspondingly threaded bore 115 which engage a flat ledge 117 on the housing 62.

When a pressure drop occurs in the ambient atmosphere or environment 98, air captured in the pressure responsive or ambient chamber 102 is drawn from or evacuated from the chamber and passes through filter 100 on outside contact surface 88 of piston/actuator 65 at a rate determined by the characteristics of filter 100. The filter 100 is provided to prevent the passage of particles, dust or other objects which may otherwise interfere with the operation of the actuator 66. The filter essentially provides a passage having a plurality of holes therethrough to allow generally free flow of air therethrough. However, as noted, the filter 100 prevents or at least reduces the passage of particles and other material which might otherwise have the potential to follow the actuator 66. It is within the scope of the present application to include merely a passage and not a filter in situations in which filtering may not be necessary. As air passes from chamber 102 to the environment 98, the pressure differential between chambers 83, 86 (and therefore inside passageways 90, 92), collectively the reservoir chamber 93, and ambient chamber 102 increases. This pressure differential causes working surface 94 of a diaphragm or piston head 103 piston/actuator 65 to move away from stopper 96, therefore moving shear pin 76 out of mating engagement with aperture 78.

As shown, the diaphragm or piston head 103 is carried in the chamber 102. The shear pin 76 is attached to the piston head 103 and travels with the movement of the piston head 103. The piston head 103 can be sealed within the chamber 102 but may be somewhat loose within the chamber. The degree of sealing depends on the degree of responsiveness required by the latch mechanism. For more sensitive applications, in which a quicker release may be required, the reservoir 93 can be sealed from the ambient chamber 102 by sealing the cover 64 to the housing 62 and providing a seal between the piston 103 and chamber 102. The seal between the piston 103 and chamber would be a sliding seal to allow movement of the piston 103 within the chamber. However, many decompression event situations may have such a rapid and significant change in pressure that a seal between the piston 103 and the chamber 102 may not be required.

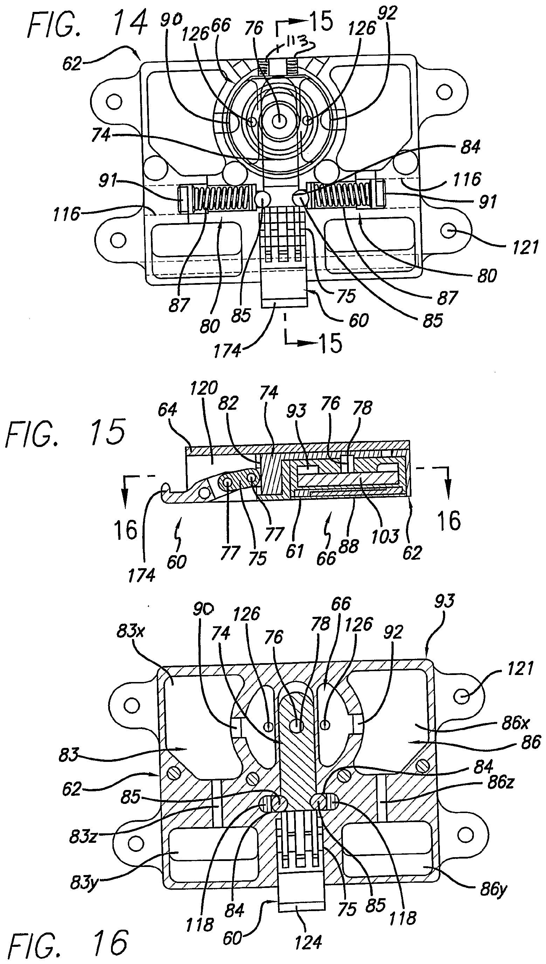

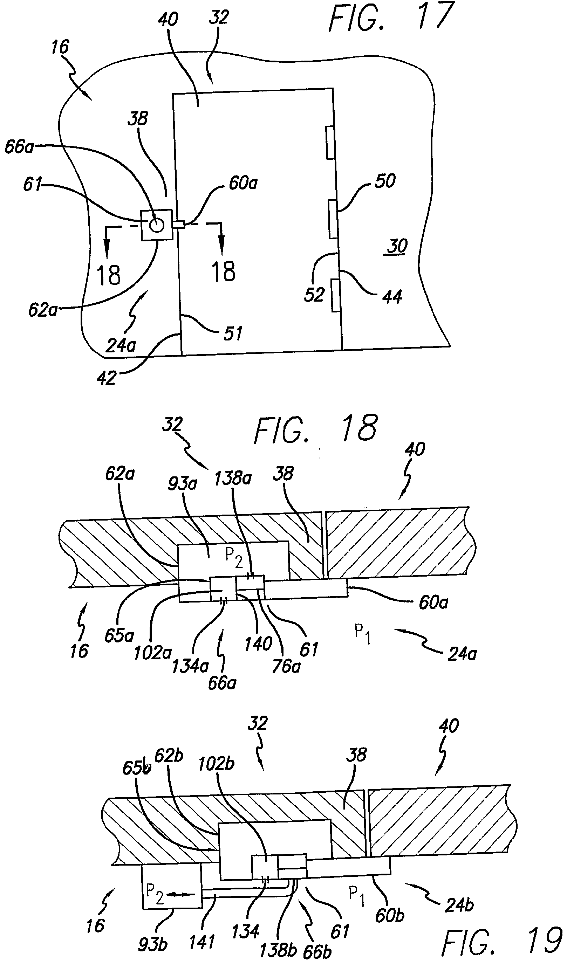

With reference to Figs. 17-19 a general diagrammatic illustration of the latch mechanism 24a described above is illustrated. The purpose of this general diagrammatic illustration is to show general concepts relating to the operation of the latch mechanism 24a. Fig. 17 is similar to Fig. 2 such that it shows a door or panel 40 retained relative to a frame 38. A retaining structure such as a hinge 50 is also provided. The latch mechanism 24a is similar to that as shown in Figs. 4-16 such that the latch mechanism 24a includes a housing 62a, a bolt 60a and pressure responsive device 66a. The latch mechanism 24a as shown in Figs. 17-19 is attached to the wall or frame 38. With reference to Figs. 3-9, 14, 16, 20 and 21 the latch mechanism 24, 24a, 24c is attached to the frame 38 using fasteners extending through mounting holes 121, 121c. The fasteners and mounting holes 121 on the housing 62 is just one example of means for attaching the latch to the barrier 16.

With reference to Fig. 18, a general diagrammatic cross-sectional view is illustrated as taken along 18-18 in Fig. 17. In this view, the bolt 60a is generally diagrammatically shown engaging the panel 40. The latch mechanism 24a includes the housing 62a which includes the air cylinder 66a. As described above the air cylinder may take other forms but generally the cylinder is a form of pressure responsive device 66, 66a carried on the latch body or housing 62a. As diagrammatically illustrated, the pressure responsive device 66a includes a reservoir portion or chamber 93a and an ambient chamber portion 102a. The ambient portion or chamber 102a communicates through an opening 134a, or plurality of openings such as with the filter 100, with the ambient atmosphere on the side of the barrier 16 to which the latch 24 is attached. The reservoir chamber 93a communicates with the pressure responsive device 66a through an opening 138a or plurality of openings.

A diaphragm or piston 140 or other movable structure is operatively retained in the pressure responsive device attached through a linkage 76a, such as the pin 76 shown in Fig. 6, to engage the bolt 60a. The linkage 76a may engage the bolt or may actually be linked to the bolt to withdraw the bolt 60a relative to the frame 38. In this regard, the linkage 76a broadly, generally engages or acts upon the bolt 60a to retain the bolt in a retained position to hold the panel closed. Upon activation or operation of the diaphragm 140 the linkage 76a is withdrawn or otherwise operates on the bolt 60a to disengage or otherwise release the bolt 60a.

In circumstances in which the ambient pressure, P1 is generally equal to the pressure, P2, in the reservoir chamber 93 a there is no force or action on the diaphragm 140 and linkage 76a. As such, the bolt 60a remains in engagement with the frame 38. When there is a change in the pressures P1, P2 such that P1 rapidly drops relative to P2, the change in pressure is a result of the ambient chamber 102 communicating through orifice 134a with the ambient atmosphere by either shift or force on the diaphragm 140 overcoming the normalizing and resisting force of the pressure P2 in the reservoir chamber 93a. It should be noted that the position of the latch mechanism 24 could be reversed such that the latch mechanism 24 is retained on the panel 40 and the bolt 60 engages the frame 38. A detent mechanism 80 such as that shown in Fig. 6 and other figures in this disclosure might also be used to provide resistance to unintended changes in the ambient atmosphere P1, which could initiate an unlatching event.

With reference to Fig. 19, another embodiment of the pressure responsive device 66b is shown in general diagrammatic form. In this embodiment, many of the same structures are similar to those as shown in Fig. 18. However, a separate, external reservoir chamber 93b is provided to provide a volume of atmosphere at a second pressure P2. The chamber 93b communicates with the pressure responsive device through orifice 134b. In this embodiment, the reservoir chamber 93b is coupled to the orifice 134b by means of a hose or line 141.

This embodiment allows a latch 24b, which might otherwise vent on both sides of the barrier 16, to be vented on a single side of the barrier. In this regard, latches have been developed which vent to the passenger compartment as well as the cockpit. This requires openings to the related chambers to be positioned on either side of the barrier 16. As noted above in this application, there are situations in which it may be undesirable to provide venting to both sides. As such, the separate reservoir 93b of the embodiment as shown in Fig. 19 can be connected to the orifice 134b which might normally be vented to the passenger compartment. This embodiment allows retrofitting of existing latches which vent on both sides of the barrier as well as allows more options in providing and producing latch mechanisms.

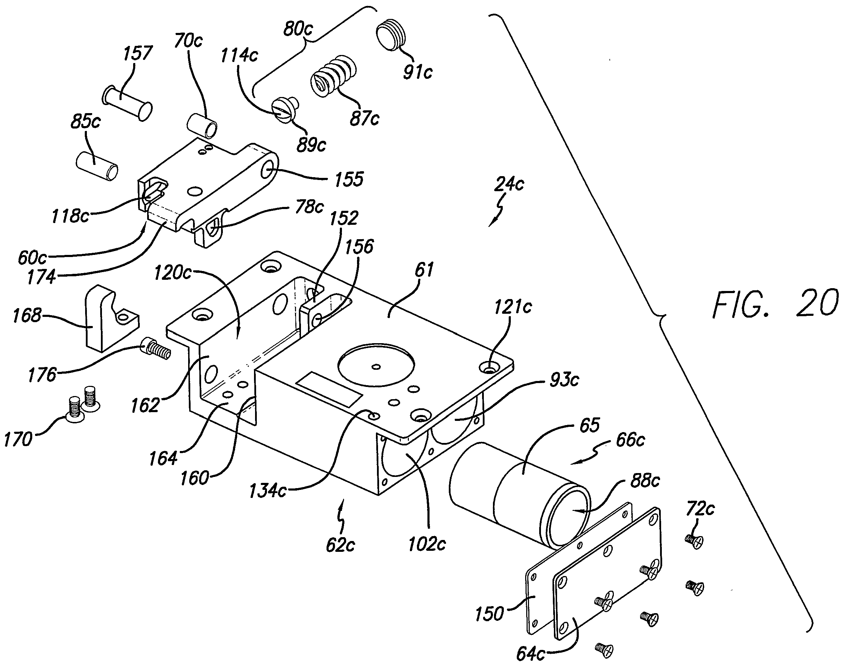

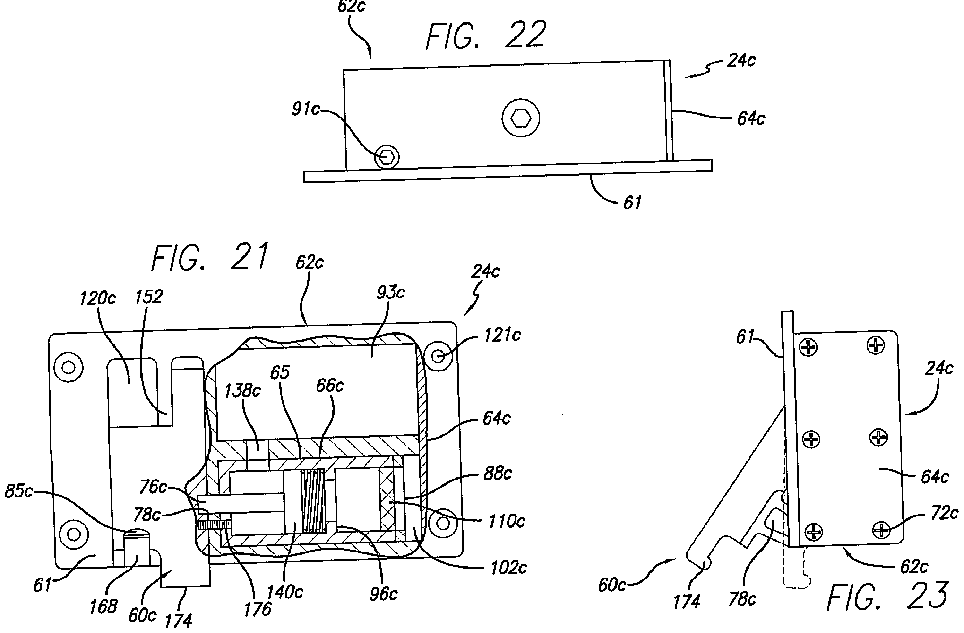

Turning now to Figs. 20-23, another embodiment of the latch mechanism 20c is disclosed. With reference to Fig. 20, the latch mechanism 20c includes a housing 62c, a pressure responsive device 66c and bolt 60c. With reference to the partial fragmentary cross-sectional view of Fig. 21, the air cylinder 65c is retained in chamber 102c defined by the housing 62c. A reservoir chamber 93c communicates with the ambient chamber 102c by means of the passage 138c. As shown in Fig. 20, orifices 134c are provided on the housing 62c and communicate with the ambient chamber 102c. The ambient chamber 102c communicates with the filter or porous side 88c of the air cylinder 65c. The reservoir chamber 93c communicates through passage 138c with the air chamber 65c generally on an opposite side of a diaphragm or piston 140c. Cover 64c is held in place over open ends of the chambers 102c, 93c by means of screws 72c and a seal 150.

The bolt 60c is retained in bolt channel 120c. A flange 152 is positioned in the channel 120c to which an arm 154 of the bolt 60c is attached by means of a bushing 70c. The bushing 70c extends through a bore 155 in the bolt 60c, the bore 156 formed in the flange 152, and a corresponding portion of the bore formed in a side wall 160 of the channel 120c. A rivet 157 extends through the bushing 70c to moveable retain in the bolt 60c in the channel 120c. An opposing side wall 162 and base 164 define the channel 120c. The bolt 60c is pivotable into and out of the channel 120c about the bushing 70c.

A bore or receptacle 118c is formed in a portion of the bolt 60c for receiving components of the retainer assembly 80c. Similar to the retainer assembly 80 described above, the retainer assembly 80c includes a roller 85c which is captively retained in the receptacle 118c, a plug 89c, spring 87c and adjustment screw 91c which is threadably engaged with corresponding portion of the receptacle 118c. Instead of acting directly on a component of the bolt 60c such as shown in Fig. 6, the retainer assembly 80c provides a biasing force against a detent anchor 168 mounted to the base 164 by screws 170.

With reference to Figs. 20, 21 and 23 the air cylinder 65c includes a pin 76c which is operatively retained in the air cylinder 66c, connected to the piston 140, and extends outwardly into a corresponding aperture 78c on the bolt 60c. The aperture 78c need not extend all the way through the corresponding portion of the bolt 60c but may be provided in the form of a recess for receiving the pin 76c.

In the locked position, the bolt 60c is generally flush with a top 61 of the housing 62c. An extending finger 174 of the bolt 60c extends outwardly away from the edge of the housing to engage a corresponding panel or other structure. During an activation or decompression event a change in pressure on the side (61) of the latch mechanism 24c facing the relevant compartment (for example the cockpit) will cause a change in pressure in the ambient chamber 102c communicating through apertures 134c. This change in pressure will affect the air cylinder 65c, retained in place in the chamber 102c by screw 176, by causing the pin 76c to be withdrawn into the air chamber 65c. The pin 76c will shift only if the pressure differential in the ambient chamber 102c is sufficiently greater than the pressure in the reservoir chamber 93c and sufficient to overcome the biasing force of spring 105c. Assuming that there is a significant pressure differential, the pin 76c will be disengaged from the aperture 78c. Disengagement of the pin 76c from the aperture 78c allows rotating or rotation of the finger 174 of the bolt 60c away from the corresponding surface. Generally, the bolt 60c will not move unless the force acting on the panel 40 to which it is related is sufficient to overcome the detent force provided by the retaining mechanism 80c.

Assuming that the force on the panel is sufficient, the transferred from the panel through on the finger 174 will cause the roller 85c to be moved relative to the anchor 168 causing a compression in the spring 87c. When the force applied to the finger 174c exceeds the force of the spring 87c on the roller 85c, the roller 85c will disengage the anchor 168 thereby allowing free movement of the bolt 60c and disengagement of the panel to which the latch mechanism is attached.

In use, the latch mechanism as disclosed provides a method of latching or holding a panel or door in a closed position against forces applied thereto. The latch mechanism includes structures which function to retain the panel in the closed or latched position subject to disengagement in response to a pressure differential. However, the pressure differential is sensed only on one side of a barrier to which the latch is attached. During a decompression event, the pressure on the other side of the barrier generally has little or no effect on the operation of the latch mechanism. Sensing of the pressure differential on a single side of the barrier is accomplished by including the air cylinder 66b or other pressure sensing device, including electrical, mechanical, hydraulic, pneumatic and any other suitable pressure sensing device. In contrast to other latch mechanisms which might require venting to both sides of a barrier, the present disclosure includes a reservoir which maintains a generally constant pressure relative to ambient. This reservoir or reservoir chamber does not change in response to a rapid change in ambient pressure.

The latch mechanism is provided including a bolt retained in a housing thereof. The air cylinder communicates with a reservoir chamber and is operatively coupled to the bolt. The bolt is retained in a locked position when the ambient pressure, P1, is generally equal to the reservoir pressure P2. Upon a sudden change in the ambient pressure P1 the bolt will be disengaged. A retaining mechanism can be provided to prevent disengagement of the bolt resulting from unintended or anomalous pressure changes. When the forces applied to the panel to which the latch mechanism is related are sufficiently greater than the retaining force of the retaining mechanism the panel will be displaced relative to the corresponding frame.

While embodiments of the disclosure are shown and described, it is envisioned that those skilled in the art may devise various modifications and equivalents without departing from the scope of the disclosure as recited in the following claims.

## Claims

1. A latch mechanism (24) for releasably retaining a first structure (40) relative to a second structure (38), the latch mechanism comprising:
a housing (62) attachable to at least one of a first structure (38) and a second structure (40);
a bolt (60) releasably carried on the housing;
a portion of the bolt abutting a portion of the other of a first structure and a second structure for preventing displacement of a first structure from a second structure;
a pressure responsive device (66) for detecting a decrease in pressure on one side of a panel (40);
a bolt engaging device (76) coupled to the pressure responsive device and moveably displaceable in response to operation of the pressure responsive device; and
a receiving structure (78) on the bolt for engaging at least a portion of the bolt engaging device to prevent displaceable movement of the bolt prior to operation of the pressure responsive device.

2. The latch mechanism of claim 1, wherein the bolt (60) is pivotably retained on the housing.

3. The latch mechanism of claim 1, wherein the pressure responsive device (66) is carried on the housing.

4. The latch mechanism of claim 1, the pressure responsive device (66) further comprising an air cylinder (65) and a reservoir (93), the air cylinder having a first side (88) communicating with ambient atmosphere on the side of a panel (40) to which the latch mechanism is attached, and a second side communicating with the reservoir (93), the first side (88) being exposed to rapid changes in pressure in the ambient atmosphere and the second side being generally isolated from rapid changes in pressure in ambient atmosphere.

5. The latch mechanism of claim 1, wherein the pressure responsive device (66a) includes a pressure responsive diaphragm (140) operatively retained in a pressure responsive chamber (102a), the chamber including a first opening (134a) communicating with a first volume and a second opening (138a) communicating with a second volume, a pressure differential between the first volume and second volume acting on the pressure responsive diaphragm (140) in the chamber.

6. The latch mechanism of claim 5, further comprising the pressure of the first volume is defined by ambient atmosphere and the pressure of the second volume is defined by a reservoir (93a) communicating with the pressure responsive chamber (102a) wherein the reservoir is generally isolated from ambient atmosphere.

7. The latch mechanism of claim 1, where-in the pressure responsive device (66) includes a pneumatic piston (140c), operatively retained in a pressure responsive chamber, the pressure responsive chamber including a first opening communicating with a first volume (102c) having a first pressure and a second opening (138c) communicating with a second volume (93c) having a second pressure, a pressure differential between the first volume and second volume operating the piston in the chamber.

8. The latch mechanism of claim 1, wherein the pressure responsive device (66) includes an electrical pressure sensing device and a moving device coupled to the electrical pressure sensing device, the electrical pressure sensing device communicating with a first volume having a first pressure and a second volume having a second pressure.

9. The latch mechanism of claim 1, further comprising a retaining mechanism (80) providing a retaining force to retain the bolt (60) in a latched position prior to exceeding a predetermined retaining force.

10. A latch mechanism (24) for releasably retaining a panel (40) relative to a frame (38), the latch mechanism comprising:
a latch housing (62) attachable to at least one of a panel and a frame;
a bolt (60) pivotably carried on the latch housing;
a portion of the bolt extending from the latch housing for abutting a portion of the other of a panel and a frame to prevent displacement of a panel from a frame;
a slider (74) displaceably carried on the latch housing and operatively connected to the bolt;
a pressure responsive device (66) responsive to at least a decrease in pressure on the side of a panel to which the latch device is attached;
a bolt engaging pin (76) operatively connected to the pressure responsive device, the bolt engaging pin being moveably displaceable in response to operation of the pressure responsive device; and
means (80) for retaining the slider for engaging at least a portion of the bolt engaging pin to retain the slider against displacement prior to operation of the pressure responsive device.

11. The latch mechanism of claim 10, wherein the pressure responsive device (66) includes means for detecting at least a first pressure and a pressure reservoir (93) defining a second pressure, generally isolated from the first pressure, the pressure responsive device operating in response to a differential between a first pressure and a second pressure.

12. The latch mechanism of claim 10, wherein the pressure responsive device is carried on the latch housing (62).

13. The latch mechanism of claim 10, wherein at least a portion of the pressure responsive device (66) is separate from the housing and communicates with the housing.

14. The latch mechanism of claim 10, the pressure responsive device further comprising an air cylinder (65) and a reservoir (93), the air cylinder having a first side (88) communicating with ambient atmosphere on the side of a panel to which the latch mechanism is attached and a second side communicating with the reservoir, the first side (88) being exposed to rapid changes in pressure in ambient atmosphere and the reservoir being generally isolated from rapid changes in pressure in ambient atmosphere.

15. The latch mechanism of claim 10, where-in the pressure responsive device (66) includes a pneumatic piston (140c) operatively retained in a piston chamber, the piston chamber including a first opening communicating with a first volume having a first pressure and a second opening communicating with a second volume having a second pressure, a pressure differential between the first volume and second volume operating the piston in the chamber.

16. The latch mechanism of claim 10, where in the pressure responsive device (66) includes a pressure responsive diaphragm (140) operatively retained in a pressure responsive chamber, the chamber including a first opening communicating with a first volume and a second opening communicating with a second volume, a pressure differential between the first volume and second volume acting on the pressure responsive diaphragm in the chamber.

17. The latch mechanism of claim 10, wherein the pressure responsive device (66) includes an electrical pressure sensing device and a moving device coupled to the electrical pressure sensing device, the electrical pressure sensing device communicating with a first volume having a first pressure and a second volume having a second pressure.

18. The latch mechanism of claim 10, further comprising a retaining mechanism (80) providing a retaining force on the bolt.

19. A method for controllably latching a panel (40) relative to a frame (38), the latching method being responsive to a pressure differential detected on one side of a panel to which a latch mechanism is attached, the method comprising the steps of:
providing a latch mechanism (24) operatively associated with a panel;
providing a bolt (60) releasably carried on the latch mechanism, the bolt being operatively associated with a panel;
providing a pressure responsive device (66) operatively coupled to the bolt, the pressure responsive device communicating with ambient atmosphere;
providing a reservoir (93) communicating with the pressure responsive device, the reservoir being generally isolated from ambient atmosphere;
retaining the bolt (60) in engagement with a panel;
detecting pressure on one side of a panel;
operating the pressure responsive device (66) in response to of a pressure differential between the reservoir and ambient atmosphere;
disengaging the bolt (60) from a panel upon development of a pressure differential of a predetermined degree; and
displacing a panel relative to a frame upon disengagement of the bolt on a panel.

20. A latch mechanism (24) for releasably retaining a panel (40), the latch mechanism comprising:
a pressure responsive device (66) carried on a housing (62) and communicating with ambient atmosphere;
a reservoir (93) generally isolated from ambient atmosphere and communicating with the pressure responsive device;
a bolt (60) releasably carried on the housing and operatively engaged with the pressure responsive device; and
the pressure responsive device (66) releasing the bolt upon sensing a pressure differential between the ambient atmosphere and the reservoir.

## Patentansprüche

1. Verriegelungsmechanismus (24) zum entfernbaren Zurückhalten einer ersten Struktur (40) mit Bezug auf eine zweite Struktur (38), wobei der Verriegelungsmechanismus Folgendes umfasst:
ein Gehäuse (62), das an mindestens einer von einer ersten Struktur (38) und einer zweiten Struktur (40) befestigt werden kann;
einen Bolzen (60), der entfernbar auf dem Gehäuse getragen wird;
einen Abschnitt des Bolzens, der an einen Abschnitt der anderen einer ersten Struktur und einer zweiten Struktur anstößt, um die Verschiebung einer ersten Struktur von einer zweiten Struktur zu verhindern;
eine auf Druck reagierende Vorrichtung (66) zum Nachweisen einer Verringerung des Drucks auf einer Seite einer Platte (40);
eine Bolzeneingriffsvorrichtung (76), die mit der auf Druck reagierenden Vorrichtung gekoppelt ist und in Reaktion auf die Betätigung der auf Druck reagierenden Vorrichtung beweglich verschoben werden kann; und
eine Aufnahmestruktur (78) auf dem Bolzen zum Eingreifen von mindestens einem Abschnitt der Bolzeneingriffsvorrichtung, um eine verschiebbare Bewegung des Bolzens vor der Betätigung der auf Druck reagierenden Vorrichtung zu verhindern.

2. Verriegelungsmechanismus nach Anspruch 1, wobei der Bolzen (60) schwenkbar auf dem Gehäuse zurückgehalten wird.

3. Verriegelungsmechanismus nach Anspruch 1, wobei die auf Druck reagierende Vorrichtung (66) auf dem Gehäuse getragen wird.

4. Verriegelungsmechanismus nach Anspruch 1, wobei die auf Druck reagierende Vorrichtung (66) weiter einen Luftzylinder (65) und einen Behälter (93) umfasst, wobei der Luftzylinder eine erste Seite (88) aufweist, die mit der umgebenden Atmosphäre auf der Seite einer Platte (40) kommuniziert, an die der Verriegelungsmechanismus befestigt ist, und eine zweite Seite, die mit dem Behälter (93) kommuniziert, wobei die erste Seite (88) schnellen Druckveränderungen in der umgebenden Atmosphäre ausgesetzt ist, und wobei die zweite Seite im Allgemeinen von schnellen Druckveränderungen in der umgebenden Atmosphäre isoliert ist.

5. Verriegelungsmechanismus nach Anspruch 1, wobei die auf Druck reagierende Vorrichtung (66a) eine auf Druck reagierende Membran (140) umfasst, die bei Betätigung in einer auf Druck reagierenden Kammer (102a) zurückgehalten wird, wobei die Kammer eine erste Öffnung (134a) umfasst, die mit einem ersten Volumen kommuniziert, und eine zweite Öffnung (138a), die mit einem zweiten Volumen kommuniziert, wobei eine Druckdifferenz zwischen dem ersten Volumen und dem zweiten Volumen auf die auf Druck reagierende Membran (140) in der Kammer wirkt.

6. Verriegelungsmechanismus nach Anspruch 5, **dadurch gekennzeichnet, dass** der Druck des ersten Volumens durch die umgebende Atmosphäre definiert ist und der Druck des zweiten Volumens durch einen Behälter (93a) definiert ist, der mit der auf Druck reagierenden Kammer (102a) kommuniziert, wobei der Behälter im Allgemeinen von der umgebenden Atmosphäre isoliert ist.

7. Verriegelungsmechanismus nach Anspruch 1, wobei die auf Druck reagierende Vorrichtung (66) einen pneumatischen Kolben (140c) umfasst, der bei Betätigung in einer auf Druck reagierenden Kammer zurückgehalten wird, wobei die auf Druck reagierende Kammer eine erste Öffnung umfasst, die mit einem ersten Volumen (102c) kommuniziert, das einen ersten Druck aufweist, und eine zweite Öffnung (138a), die mit einem zweiten Volumen (93c) kommuniziert, das einen zweiten Druck aufweist, wobei eine Druckdifferenz zwischen dem ersten Volumen und dem zweiten Volumen den Kolben in der Kammer betätigt.

8. Verriegelungsmechanismus nach Anspruch 1, wobei die auf Druck reagierende Vorrichtung (66) eine elektrische Druckmessvorrichtung und eine sich bewegende Vorrichtung umfasst, die mit der elektrischen Druckmessovorrichtung gekoppelt ist, wobei die elektrische Druckmessvorrichtung mit einem ersten Volumen kommuniziert, das einen ersten Druck aufweist, und einem zweiten Volumen, das einen zweiten Druck aufweist.

9. Verriegelungsmechanismus nach Anspruch 1, weiter umfassend einen Rückhaltemechanismus (80), der eine Rückhaltekraft bereitstellt, um den Bolzen (60) in einer verriegelten Position zurückzuhalten, bevor eine vorbestimmte Rückhaltekraft überschritten wird.

10. Verriegelungsmechanismus (24) zum entfernbaren Zurückhalten einer Platte (40) mit Bezug auf einen Rahmen (38), wobei der Verriegelungsmechanismus Folgendes umfasst:
ein Verriegelungsgehäuse (62), das an mindestens eines einer Platte und eines Rahmens befestigt werden kann;
einen Bolzen (60), der schwenkbar auf dem Verriegelungsgehäuse getragen wird;
einen Abschnitt des Bolzens, der sich vom Verriegelungsgehäuse erstreckt, um an einen Abschnitt des anderen einer Platte und eines Rahmens zu stoßen, um die Verschiebung einer Platte von einem Rahmen zu verhindern;
eine Gleitvorrichtung (74), die verschiebbar auf dem Verriegelungsgehäuse getragen wird und bei Betätigung mit dem Bolzen verbunden ist;
eine auf Druck reagierende Vorrichtung (66), die auf mindestens ein Durckverringerung auf der Seite einer Platte reagiert, an die die Verriegelungsvorrichtung befestigt ist;
einen Bolzeneingriffsstift (76), der mit der auf Druck reagierenden Vorrichtung gekoppelt ist, wobei der Bolzeneingriffsstift in Reaktion auf die Betätigung der auf Druck reagierenden Vorrichtung beweglich verschoben werden kann; und
Mittel (80), um die Gleitvorrichtung zurückzuhalten, um mindestens einen Abschnitt des Bolzeneingriffsstifts einzugreifen, um die Gleitvorrichtung vor der Betätigung der auf Druck reagierenden Vorrichtung gegen die Verschiebung zurückzuhalten.

11. Verriegelungsmechanismus nach Anspruch 10, wobei die auf Druck reagierende Vorrichtung (66) Mittel umfasst, um mindestens einen ersten Druck nachzuweisen, und wobei ein Druckbehälter (93) einen zweiten Druck definiert, der im Allgemeinen vom ersten Druck isoliert ist, wobei die auf Druck reagierende Vorrichtung in Reaktion auf eine Differenz zwischen einem ersten Druck und einem zweiten Druck betätigt wird.

12. Verriegelungsmechanismus nach Anspruch 10, wobei die auf Druck reagierende Vorrichtung auf dem Verriegelungsgehäuse (62) getragen wird;

13. Verriegelungsmechanismus nach Anspruch 10, wobei mindestens ein Abschnitt der auf Druck reagierenden Vorrichtung (66) vom Gehäuse getrennt ist und mit dem Gehäuse kommuniziert.

14. Verriegelungsmechanismus nach Anspruch 10, wobei die auf Druck reagierende Vorrichtung weiter einen Luftzylinder (65) und einen Behälter (93) umfasst, wobei der Luftzylinder eine erste Seite (88) aufweist, die mit der umgebenden Atmosphäre auf der Seite einer Platte kommuniziert, an die der Verriegelungsmechanismus befestigt ist, und eine zweite Seite, die mit dem Behälter kommuniziert, wobei die erste Seite (88) schnellen Druckveränderungen in der umgebenden Atmosphäre ausgesetzt ist, und wobei der Behälter im Allgemeinen von schnellen Druckveränderungen in der umgebenden Atmosphäre isoliert ist.

15. Verriegelungsmechanismus nach Anspruch 10, wobei die auf Druck reagierenden Vorrichtung (66) einen pneumatischen Kolben (140c) umfasst, der bei Betätigung in einer Kolbenkammer zurückgehalten ist, wobei die Kolbenkammer eine erste Öffnung umfasst, die mit einem ersten Volumen kommuniziert, das einen ersten Druck aufweist, und eine zweite Öffnung, die mit einem zweiten Volumen kommuniziert, das einen zweiten Druck aufweist, wobei eine Druckdifferenz zwischen dem ersten Volumen und dem zweiten Volumen den Kolben in der Kammer betätigt.

16. Verriegelungsmechanismus nach Anspruch 10, wobei die auf Druck reagierenden Vorrichtung (66) eine auf Druck reagierende Membran (140) umfasst, die bei Betätigung in einer auf Druck reagierenden Kammer zurückgehalten wird, wobei die Kammer eine erste Öffnung umfasst, die mit einem ersten Volumen kommuniziert, und eine zweite Öffnung, die mit einem zweiten Volumen kommuniziert, wobei eine Druckdifferenz zwischen dem ersten Volumen und dem zweiten Volumen auf die auf Druck reagierende Membran in der Kammer wirkt.

17. Verriegelungsmechanismus nach Anspruch 10, wobei die auf Druck reagierende Vorrichtung (66) eine elektrische Druckmessvorrichtung und eine sich bewegende Vorrichtung umfasst, die mit der elektrischen Druckmessovorrichtung gekoppelt ist, wobei die elektrische Druckmessvorrichtung mit einem ersten Volumen kommuniziert, das einen ersten Druck aufweist, und einem zweiten Volumen, das einen zweiten Druck aufweist.

18. Verriegelungsmechanismus nach Anspruch 10, weiter umfassend einen Rückhaltemechanismus (80), der eine Rückhaltekraft auf den Bolzen bereitstellt,

19. Verfahren zum steuerbaren Verriegeln einer Platte (40) mit Bezug auf einen Rahmen (38), wobei das Verriegelungsverfahren auf eine Druckdifferenz reagiert, die auf einer Seite einer Platte nachgewiesen wird, an die der Verriegelungsmechanismus befestigt ist, wobei das Verfahren die folgenden Schritte umfasst:
Bereitstellen eines Verriegelungsmechanismus (24), der bei Betätigung mit einer Platte assoziiert ist;
Bereitstellen eines Bolzens (60), der entfernbar auf dem Verriegelungsmechanismus getragen wird, wobei der Bolzen bei Betätigung mit einer Platte assoziiert ist;
Bereitstellen einer auf Druck reagierenden Vorrichtung (66), die bei Betätigung mit dem Bolzen gekoppelt ist, wobei die auf Druck reagierende Vorrichtung mit der umgebenden Atmosphäre kommuniziert;
Bereitstellen eines Behälters (93), der mit der auf Druck reagierenden Vorrichtung kommuniziert, wobei der Behälter im Allgemeinen von der umgebenden Atmosphäre isoliert ist.
Rückhalten des Bolzens (60) in Eingriff mit einer Platte;
Nachweisen des Drucks auf einer Seite einer Platte,
Betätigen der auf Druck reagierenden Vorrichtung (66) in Reaktion auf die Druckdifferenz zwischen dem Behälter und der umgebenden Atmosphäre,
Lösen des Bolzens (60) von einer Platte bei der Entwicklung einer Druckdifferenz mit einem vorbestimmten Grad, und
Verschieben einer Platte mit Bezug auf einen Rahmen beim Lösen des Bolzens auf eienr Platte.

20. Verriegelungsmechanismus (24) zum entfenbaren Zurückhalten einer Platte (40), wobei der Verriegelungsmechanismus Folgendes umfasst:
eine auf Druck reagierende Vorrichtung (66), die auf einem Gehäuse (62) getragen wird und mit der umgebenden Atmosphäre kommuniziert;
einen Behälter (93), der im Allgemeinen von der umgebenden Atmosphäre isoliert ist und mit der auf Druck reagierenden Vorrichtung kommuniziert;
einen Bolzen (60), der entfernbar auf dem Gehäuse getragen wird und bei Betätigung mit der auf Druck reagierenden Vorrichtung eingegriffen ist; und
wobei die auf Druck reagierende Vorrichtung (66) den Bolzen entfernt, wenn sie eine Druckdifferenz zwischen der umgebenden Atmosphäre und dem Behälter misst.

## Revendications

1. Mécanisme de verrouillage (24) destiné à retenir de manière amovible une première structure (40) par rapport à une seconde structure (38), le mécanisme de verrouillage comprenant :
un boîtier (62) pouvant être fixé sur au moins soit la première structure (38) et la seconde structure (40) ;
un boulon (60) placé sur le boîtier de manière amovible ;
une partie du pêne venant en butée contre une partie de l'autre d'une première structure et d'une seconde structure afin d'empêcher le déplacement d'une première structure par rapport à une seconde structure ;
un dispositif réactif à la pression (66) destiné à détecter une diminution de pression sur un côté d'un panneau (40) ;
un dispositif d'engagement de boulon (76) relié au dispositif réactif à la pression et pouvant se déplacer de manière mobile en réponse au fonctionnement du dispositif réactif à la pression ; et
une structure de réception (78) sur le boulon, destinée à engager au moins une partie du dispositif d'engagement de boulon afin d'empêcher le déplacement du boulon avant le fonctionnement du dispositif réactif à la pression.

2. Mécanisme de verrouillage selon la revendication 1, dans lequel le boulon (60) est retenu de façon pivotante sur le boîtier.

3. Mécanisme de verrouillage selon la revendication 1, dans lequel le dispositif réactif à la pression (66) est placé sur le boîtier.

4. Mécanisme de verrouillage selon la revendication 1, le dispositif réactif à la pression (66) comprenant en outre un cylindre à air (65) et un réservoir (93), le cylindre à air ayant un premier côté (88) communiquant avec l'atmosphère ambiante sur le côté d'un panneau (40) sur lequel le mécanisme de verrouillage est fixé, et un second côté communiquant avec le réservoir (93), le premier côté (88) étant exposé à des changements rapides de pression dans l'atmosphère ambiante, et le second côté étant généralement isolé des changements rapides de pression dans l'atmosphère ambiante.

5. Mécanisme de verrouillage selon la revendication 1, dans lequel le dispositif réactif à la pression (66a) comprend un diaphragme réactif à la pression (140) retenu dans une chambre réactive à la pression (102a), la chambre comprenant une première ouverture (134a) communiquant avec un premier volume et une seconde ouverture (138a) communiquant avec un second volume, une différence de pression entre le premier volume et le second volume agissant sur le diaphragme réactif à la pression (140) dans la chambre.

6. Mécanisme de verrouillage selon la revendication 5, dans lequel, en outre, la pression du premier volume est définie par l'atmosphère ambiante et la pression du second volume est définie par un réservoir (93a) communiquant avec la chambre réactive à la pression (102a) dans laquelle le réservoir est généralement isolé de l'atmosphère ambiante.

7. Mécanisme de verrouillage selon la revendication 1, dans lequel le dispositif réactif à la pression (66) comprend un piston pneumatique (140c), retenu dans une chambre réactive à la pression, la chambre réactive à la pression comprenant une première ouverture communiquant avec un premier volume (102c) ayant une première pression et une seconde ouverture (138c) communiquant avec un second volume (93c) ayant une seconde pression, une différence de pression entre le premier volume et le second volume commandant le piston dans la chambre.

8. Mécanisme de verrouillage selon la revendication 1, dans lequel le dispositif réactif à la pression (66) comprend un dispositif électrique de détection de pression et un dispositif mobile relié au dispositif électrique de détection de pression, le dispositif électrique de détection de pression communiquant avec un premier volume ayant une première pression et un second volume ayant une seconde pression.

9. Mécanisme de verrouillage selon la revendication 1, comprenant en outre un mécanisme de retenue (80) fournissant une force de retenue afin de retenir le boulon (60) dans une position verrouillée avant de dépasser une force de retenue prédéterminée.

10. Mécanisme de verrouillage (24) destiné à retenir de façon amovible un panneau (40) par rapport à un cadre (38), le mécanisme de verrouillage comprenant :
un boîtier de verrou (62) pouvant être fixé sur au moins un panneau ou une structure ;
un boulon (60) porté de manière pivotante sur le boîtier de verrou ;
une partie de boulon s'étendant depuis le boîtier de verrou afin de venir en butée contre une partie de l'autre d'un panneau et d'un cadre afin d'empêcher le déplacement d'un panneau par rapport à une structure ;
un élément coulissant (74) porté de façon déplaçable sur la boîtier de verrou et relié au boulon ;
un dispositif réactif à la pression (66) réagissant à au moins une diminution de pression sur le côté d'un panneau sur lequel le dispositif de verrouillage est fixé ;
une goupille d'engagement de boulon (76) reliée au dispositif réactif à la pression, la goupille d'engagement de boulon pouvant se déplacer de manière mobile en réponse au fonctionnement du dispositif réactif à la pression ; et
un moyen (80) destiné à retenir l'élément coulissant afin d'engager au moins une partie de la goupille d'engagement de boulon de façon à empêcher l'élément coulissant de coulisser avant le fonctionnement du dispositif réactif à la pression.

11. Mécanisme de verrouillage selon la revendication 10, dans lequel le dispositif réactif à la pression (66) comprend un moyen destiné à détecter au moins une première pression et un réservoir de pression (93) définissant une seconde pression, généralement isolée de la première pression, le dispositif réactif à la pression fonctionnant en réponse à une différence entre une première pression et une seconde pression.

12. Mécanisme de verrouillage selon la revendication 10, dans lequel le dispositif réactif à la pression est installé sur le boîtier du verrou (62).

13. Mécanisme de verrouillage selon la revendication 10, dans lequel au moins une partie du dispositif réactif à la pression (66) est séparée du boîtier et communique avec le boîtier.

14. Mécanisme de verrouillage selon la revendication 10, le dispositif réactif à la pression comprenant en outre un cylindre à air (65) et un réservoir (93), le cylindre à air ayant un premier côté (88) communiquant avec l'atmosphère ambiante sur le côté d'un panneau (40) sur lequel le mécanisme de verrouillage est fixé, et un second côté communiquant avec le réservoir (93), le premier côté (88) étant exposé à des changements rapides de pression dans l'atmosphère ambiante et le second côté étant généralement isolé des changements rapides de pression dans l'atmosphère ambiante.

15. Mécanisme de verrouillage selon la revendication 10, dans lequel le dispositif réactif à la pression (66) comprend un piston pneumatique (140c), retenu dans une chambre de piston, la chambre de piston comprenant une première ouverture communiquant avec un premier volume ayant une première pression, et une seconde ouverture communiquant avec un second volume ayant une seconde pression, une différence de pression entre le premier volume et le second volume commandant le piston dans la chambre.

16. Mécanisme de verrouillage selon la revendication 10, dans lequel le dispositif réactif à la pression (66) comprend un diaphragme réactif à la pression (140) retenu dans une chambre réactive à la pression, la chambre comprenant une première ouverture communiquant avec un premier volume et une seconde ouverture communiquant avec un second volume, une différence de pression entre le premier volume et le second volume agissant sur le diaphragme réactif à la pression dans la chambre.

17. Mécanisme de verrouillage selon la revendication 10, dans lequel le dispositif réactif à la pression (66) comprend un dispositif électrique de détection de pression et un dispositif mobile relié au dispositif électrique de détection de pression, le dispositif électrique de détection de pression communiquant avec un premier volume ayant une première pression et un second volume ayant une seconde pression.

18. Mécanisme de verrouillage selon la revendication 10, comprenant en outre un mécanisme de retenue (80) fournissant une force de retenue sur le boulon.

19. Procédé de verrouillage commandé d'un panneau (40) par rapport à un cadre (38), le procédé de verrouillage réagissant à une différence de pression détectée sur un côté d'un panneau sur lequel le mécanisme de verrouillage est fixé, le procédé comprenant les étapes qui consistent à :
prévoir un mécanisme de verrouillage (24) associé au panneau ;
prévoir un boulon (60) fixé de manière amovible sur le mécanisme de verrouillage, le boulon étant associé au panneau ;
prévoir un dispositif réactif à la pression (66) relié au boulon, le dispositif réactif à la pression communiquant avec l'atmosphère ambiante ;
prévoir un réservoir (93) communiquant avec le dispositif réactif à la pression, le réservoir étant généralement isolé de l'atmosphère ambiante ;
maintenir le retenir le boulon (60) en contact avec un panneau ;
détecter la pression sur un côté d'un panneau ;
commander le dispositif réactif à la pression (66) en réponse à la différence de pression entre le réservoir et l'atmosphère ambiante ;
désengager le boulon (60) d'un panneau lors du développement d'une différence de pression selon un degré prédéterminé ; et
déplacer un panneau par rapport à un cadre lors du désengagement du boulon sur un panneau.

20. Mécanisme de verrouillage (24) destiné à retenir de manière amovible un panneau (40), le mécanisme de verrouillage comprenant :
un dispositif réactif à la pression (66) fixé sur un boîtier (62) et communiquant avec l'atmosphère ambiante ;
un réservoir (93) généralement isolé de l'atmosphère ambiante et communiquant avec le dispositif réactif à la pression ;
un boulon (60) fixé de manière amovible sur le boîtier et engagé avec le dispositif réactif à la pression ; et
le dispositif réactif à la pression (66) libérant le boulon après lors de la détection d'une différence de pression entre l'atmosphère ambiante et le réservoir.
